# EUROPÄISCHE PATENTSCHRIFT

(11) **EP 0 413 945 B1**
(45) Veröffentlichungstag und Bekanntmachung des Hinweises auf die Patenterteilung: **29.11.1995**
(21) Anmeldenummer: 90113425.4
(22) Anmeldetag: 13.07.1990
(51) Int. Cl.: G09B 9/00, G09B 29/10

(54) **Sandkasten für den taktischen Unterricht**
Sand box for tactical training
Caisse à sable pour instruction tactique

(30) Priorität: 21.07.1989 DE 3924159
(43) Veröffentlichungstag der Anmeldung: 27.02.1991
(73) Patentinhaber: Hagenlocher, Bernd, D-75446 Wiernsheim (DE)
(72) Erfinder: Hagenlocher, Bernd, D-75446 Wiernsheim (DE)
(74) Vertreter: von der Heyde, Detlev, Dipl.-Ing. (FH)

(56) Entgegenhaltungen:
- EP-A- 0 220 528
- DE-A- 2 355 071
- US-A- 3 820 134
- US-A- 3 850 427
- US-A- 4 515 360

## Beschreibung

Die Erfindung geht von einem Sandkasten gemäß dem Oberbegriff des Anspruchs 1 aus.

In der Broschüre "Der Sandkasten" von Karlheinz Herzig, 2.Auflage, Verlag Offene Worte, Bonn (ISBN 3 87599 039 0) wird der Aufbau eines Sandkastens für den taktischen Unterricht und seine Anwendung eingehend beschrieben.

Der dort angegebene Sandkasten besteht aus diversen verschiedenen Holzteilen, die individuell zugerichtet und zu einem Kasten mit Untergestell mühsam zusammengebaut werden müssen.

In der Verwendung als Funksandkasten hat der Kasten rundum Schrägflächen, auf denen für die Zeit des Unterrichts die vorhandenen Truppenfunkgeräte montiert und angeschlossen sind. Ein Aufwand, der Zeit kostet, die Funkgeräte während dieser Zeit einer anderen Verwendung entzieht und den jedem Schüler zur Verfügung stehenden Platz unnötig einschränkt.

Die Übertragung eines Kartenausschnitts auf den Sandkasten erfordert hohe Genauigkeit. Um dieser einigermaßen gerecht zu werden, ist es üblich, ein engmaschiges Gitternetz aus Fäden über den Sandkasten zu spannen, das der Quadratur des Kartenausschnitts entspricht.

Nachdem die Bodenformen geschaffen sind, wird die Bodenbedeckung aufgebracht. Hierbei wird der Bewuchs zum Teil durch Aufstreuen von Trockenfarbe angedeutet, wie z.B. bei Wiesen, Kartoffel-, Rüben- und Getreidefeldern. Um ein Verschmutzen des Sandes zu vermeiden, müssen die Streumittel vor einem Umbau sorgfältig abgehoben werden.

In der Verwendung als Schießsandkasten ist es üblich, Ziele in Form von in den Sand eingebetteten Glühlämpchen zu markieren, die über ein Schaltbrett zum Aufleuchten gebracht werden können. Das Lämpchenraster ist relativ mühsam zu erstellen und kann nur recht grob sein, so daß nur einige vorbestimmte Ziele markierbar sind. Das Schaltbrett muß jeweils auf die Anordnung der Lämpchen im Feldraster des Sandkastens individuell ausgelegt sein. Zur variablen Markierung von Zielen oder Treffern wird ein Leuchtstab mit endseitiger Glühbirne empfohlen.

Die Aufgabe der Erfindung besteht darin, einen Sandkasten zu schaffen, der sowohl zur Einsatzvorbereitung im militärischen Bereich als auch für den Katastrophenfall zur Koordination der Einsatzmaßnahmen der technischen Hilfsdienste, der Feuerwehren, der ärztlichen Nothilfe und dergleichen optimal geeignet ist.

Diese Aufgabe wird durch die im Anspruch 1 angegebenen Merkmale gelöst. Die abhängigen Ansprüche zeigen vorteilhafte Ausgestaltungen des Erfindungsgegenstandes auf.

Die durch die Erfindung erzielten Vorteile bestehen insbesondere darin, daß durch die Modulbauweise eine wirtschaftliche Herstellung der Sandkastenteile möglich ist, daß der Zusammebauwesentlich vereinfacht ist und eine problemlose Vergrößerung um jeweils eine Sandkastenlänge ermöglicht, daß durch eine feste Verkabelung nur noch Anschlüsse für Sprechsätze notwendig sind, so daß jeder Schüler mehr Freifläche zur Verfügung hat und kein Funkgerät die Sicht behindert, daß durch die Projektionseinrichtung jedes beliebige Gitternetz auf die Fläche des Sandkastens projeziert werden kann und keine störenden Fäden vorhanden sind, daß durch Farbaufnahmen des betreffenden Geländeauschnittes der Sand entsprechend dem Bewuchs farbig beleuchtet werden kann, so daß auf eine Markierung mit Trockenfarbe ganz verzichtet werden kann, und daß durch die schwenkbare Punktlichtquelle jeder beliebige Ort oder jedes beliebige Ziel oder jeder Treffer innerhalb der Sandkastenfläche durch Eingabe der Orts- bzw. Zielkoordinaten über die Tastatur durch den Lichtstrahl mit punktförmigem Querschnitt markiert werden kann.

Anhand eines Ausführungsbeispiels wird die Erfindung in Verbindung mit den Zeichnungen nachfolgend näher erläutert.
Es zeigt:
- Fig.1: die wesentlichen Bauteile eines Sandkastens gemäß der Erfindung in Explosionsdarstellung.
- Fig.2: den Sandkasten gemäß Fig.1 im montierten Zustand in der Draufsicht.
- Fig.3: ein beim Sandkasten der Fig.2 verwendetes Eckteil in Perspektivdarstellung.
- Fig.4: ein Detail des Sandkastens gemäß Fig.1 bzw. Fig.2 im Schnitt IV-IV der Fig.2.
- Fig.5: den Sandkasten gemäß Fig.2 mit schwenkbarem Galgen.
- Fig.6: ein Detail des Sandkastens gemäß Fig.5 im Schnitt VI-VI der Fig.5.
- Fig.7: ein Detail des Sandkastens gemäß Fig.6 in der Draufsicht.

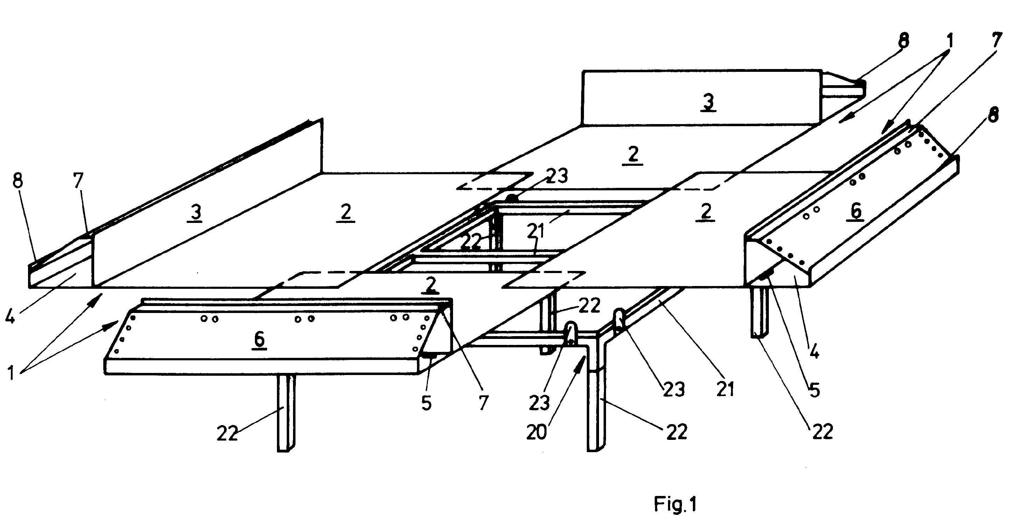

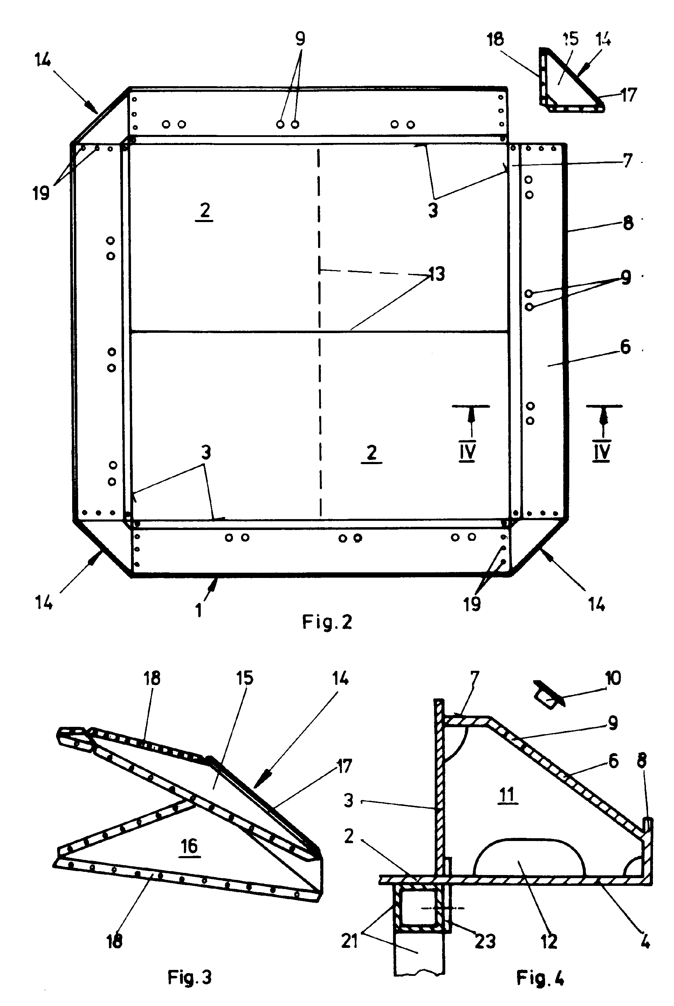

Fig.1 zeigt die wesentlichen Bestandteile eines Sandkastens für den taktischen Unterricht in Explosionsdarstellung. Ein quadratischer Sandkasten hat vier gleiche Bauteile 1. Diese bestehen aus einer Bodenplatte 2 mit Verlängerung 4, einer Bordwand 3, einer Schrägfläche 6, die oben in eine Ablagefläche 7 übergeht, und die unten eine Anlagekante 8 hat. Bündig mit der Außenseite der Bordwand 3 hat die Verlängerung 4 jeweils nahe der Außenkanten je eine Ausnehmung 5. Jede Bodenplatte 2 hat eine Tiefe, die gleich dem halben Sandkasteninnenmaß ist. Wie die Zeichnung erkennen läßt, liegen die Bodenplatten 2 paarweise übereinander. Im montierten Zustand stoßen die jeweils gegenüberliegenden Bauteile 1 mit den Vorderkanten der Bodenplatten 2 bündig aneinander, gleichfalls die Bordwände 3 mit ihren Außenkanten, die jeweils eine Ecke bilden. Die Stoßbereiche 13 (Fig.2) sind mit einer Dichtungsmasse, z.B. Silikonkautschuk, abgedichtet. Die Bauteile 1 bestehen vorzugsweise aus Stahlblech. Eine Ausführung aus armiertem Kunststoff ist denkbar.

Der Sandkasten ruht auf einem Untersatz 20 aus z.B. Profilstahlrohr. Er besteht aus einem Tragrahmen 21, der auf steckbaren Beinen 22 ruht. Die Außenmaße des Tragrahmens 21 entsprechen den zu einem Geviert zusammengefügten Bauteilen 1 von Bordwand- zu Bordwandaußenmaß. Im Eckbereich sind am Tragrahmen 21 Laschen 23 lösbar befestigt. Diese greifen in die Ausnehmungen 5 des aufgestzten Sandkastens, wie Fig.4 zeigt. Dadurch ist eine formschlüssige Verbindung zwischen Sandkasten und Untersatz 20 gegeben. Die Laschen 23 können umgelegt oder abgeschraubt werden, wenn sie z.B. wegen einer Verlängerung des Sandkastens nicht benötigt werden. In diesem Fall sind zwei Untersätze 20 fest miteinander verbunden. Die Laschen 23 an den Stoßkanten werden dabei nicht benötigt. Entsprechend der Länge der kombinierten Untersätze 20 sind an den Längsseiten zwei Bauteile 1 nebeneinander angeordnet.

Fig.2 zeigt einen fertig montierten Sandkasten gemäß Fig 1 in der Draufsicht. Die zusammengefügten Bauteile 1 sind über Eckteile 14 zu einer stabilen Einheit miteinander verbunden (Verschraubung 19). Die Eckteile 14 sind alle gleich. Sie haben gemäß Fig.3 eine dreieckförmige Bodenplatte 16 und eine dreieckförmige Schrägfläche 15. Entsprechend den Bauteilen 1 ist oben ein die Ablagefläche 7 ergänzendes Teilstück vorhanden, während die Fläche 15 unten eine Anlagekante 17 hat, die Verbindung zu den Anlagekanten 8 der Bauteile 1 hat. Über Gewindelochleisten 18 sind die Eckteile 14 durch die Verschraubung 19 fest mit den angrenzenden Bauteilen 1 verbunden. Die Schrägflächen 6 der Bauteile 1 sind entsprechend der Zahl der Ausbildungsplätze mit Gruppen von Löchern 9 versehen. Bei der Verwendung als Funksandkasten sind hier z.B. Anschlußbuchsen für Sprechsätze und Potentiometer zum Einstellen der Lautstärke montiert. Die Anschlußbuchsen sind durch eine im Raum unter den Schrägflächen 6 verlegte Verkabelung über eine an sich bekannte Gegensprechanlage untereinander verbunden.

Fig.4 zeigt den Randbereich des Sandkastens im Schnitt IV-IV der Fig.2. Im Raum zwischen der Bodenplattenverlängerung 4, der Bordwand 3 und der Schrägfläche 5 sind zur Stabilisierung Stützwände 11 eingezogen. Ein großer Freischnitt 12 ist für die interne Verkabelung vorgesehen. Die nicht benötigten Löcher 9 sind durch Verschlußstopfen 10 verschlossen.

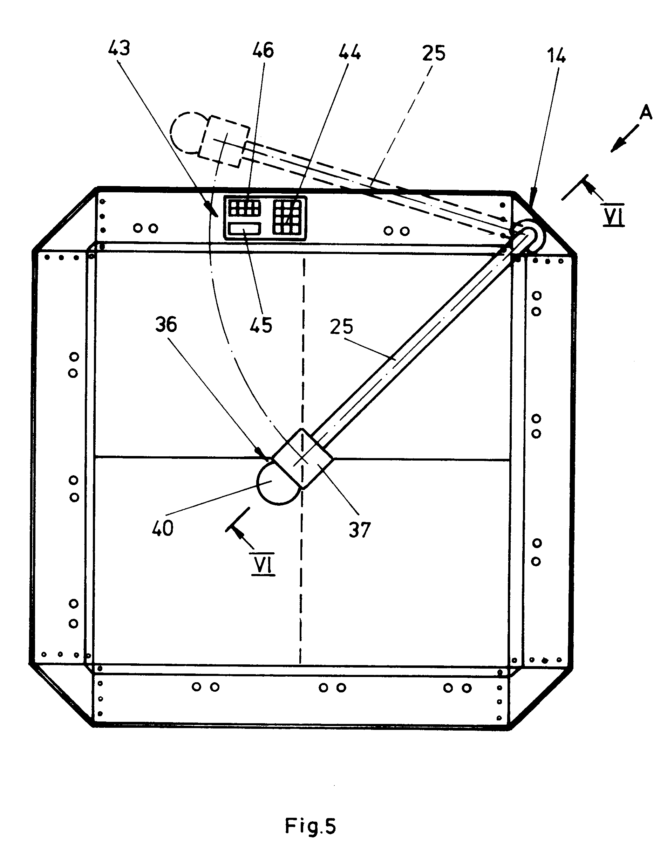

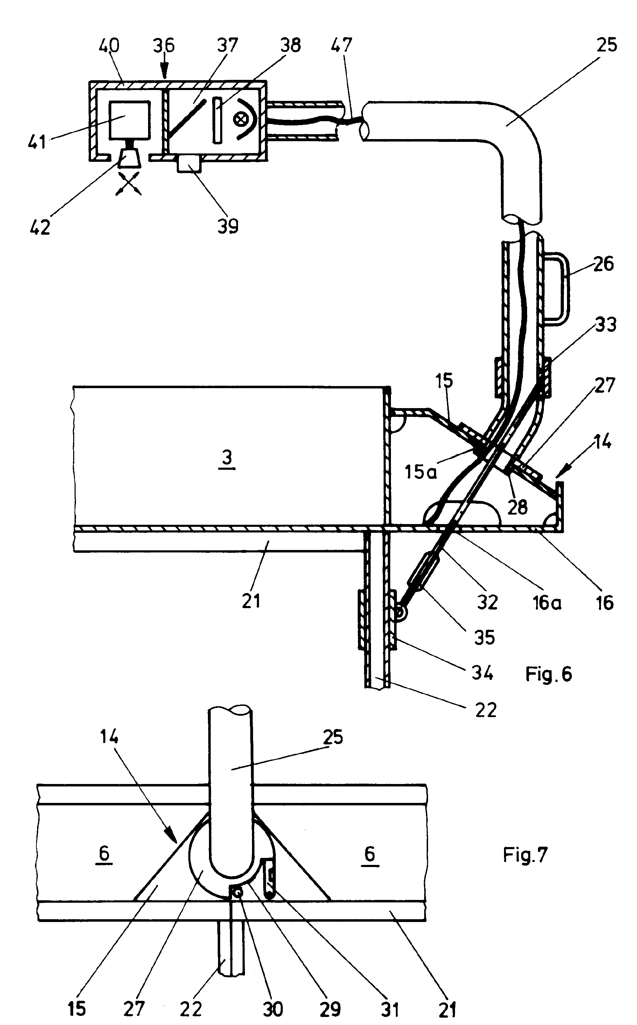

Fig.5 zeigt die Ansicht des Sandkastens gemäß Fig.2 in einer Erweiterung durch einen in einem Eckteil 14 schwenkbar gelagerten Galgen 25. Am Ende des Galgens 25 ist eine Einheit 36 aus einem Diaprojektor 37 und einer Einrichtung zur optischen Zielmarkierung 40 befestigt. Während der Diaprojektor 37 im eingeschwenkten Zustand des Galgens 25 direkt über der Mitte des Sandkastens steht, ist die Einrichtung zur optischen Zielmarkierung 40 etwas aus der Mitte versetzt angeordnet. Über eine Tastatur 43 können der Diaprojektor 37 und die Einrichtung 40 gesteuert werden. Zum Einsetzen und/oder Auswechseln von Dias ist der Galgen 25 mittels eines Handgriffs 26 (Fig.6) in die strichlinierte Position schwenkbar. Durch die aus Fig.6 ersichtliche Anordnung läßt sich der Galgen 25 nicht nur schwenken, sondern er neigt sich aufgrund der schrägen Drehachse während der Schwenkbewegung auch noch zur Seite. Dadurch befindet sich die Einheit 36 in der ausgeschwenkten Stellung des Galgens 25 in Griffhöhe, so daß z.B. ein Dia problemlos ausgewechselt werden kann.

Fig.6 zeigt im Schnitt VI-VI der Fig.5 Einzelheiten der Ausbildung des Galgens 25 und seiner Lagerung. Das untere Ende des rohrformigen Galgens 25 ist um den Neigungswinkel der Schrägfläche 15 des Eckteils 14 abgekröpft. Stirnseitig hat das Galgenrohr eine runde Flanschplatte 27 mit Ringansatz 28. Der Ansatz 28 greift spielfrei in ein Loch 15a in der Schrägfläche 15. Diese bilden zusammen das Drehlager für den Galgen 25. Diese Lagerung wird durch eine Stützstab 32 gesichert, der zwischen Stützmanschette 33 am Galgen 25 und einer Stützmanschette 34 um das Eckbein 22 des Untersatzes 20 im Durchgriff durch eine Mittelbohrung in der Flanschplatte 37 und einem Loch 16a in der Bodenplatte 16 des Eckteils 14 angeordnet ist. Die Manschetten 33 und 34 sind so angeordnet, daß die Mittelachse des Stützstabes 32 auf der Schwenkachse des Galgens 25 liegt. Über ein Spannschloß 35 ist die Länge des Stützstabes 32 genau einstellbar. Der Stützstab 32 erfüllt zwei Fuktionen: Einerseits sichert er die Lagerung des Galgens 25 und andererseits stützt er den kopflastigen Galgen 25 ab, an dessen oberem Ende die Einheit 36 befestigt ist. Die Schnittdarstellung zeigt den Diaprojektor 37 und die Einrichtung zur optischen Zielmarkierung 40 in schematischer Darstellung. Sie sind über Versorgungs- und Steuerleitungen 47 mit der Tastatur 43 (Fig.5) verbunden.

Ein in einen Führungsschlitz 38 eingeschobenes Dia wird durch eine Lichtquelle über einen Umlenkspiegel durch ein auf die Abmessungen der Sandkastenfläche abgestimmtes Weitwinkelobjektiv 39 auf die Sandfläche projeziert. Hierbei kann es sich um Geländeaufnahmen handeln oder z.B. um ein Rasterbild als Gitternetz zur Unterstützung der Geländenachbildung anhand einer Kartenvorlage. Häufig ist es wünschenswert, neben dem im Sandkasten modellierten aktuellen Zustand eines Geländes sein früheres Aussehen einzublenden. Für diesen Fall ist in eine der Bordwände 3 eines Bauteiles 1 (nicht gezeigt) eine aufrollbare Projektionsleinwand eingelassen. Sie kann im Bedarfsfall durch Befestigung an den übrigen Bordwänden 3 über den Sandkasten gespannt werden. Denkbar ist auch eine für diesen Zweck präparierte Platte, die auf den Sandkasten gelegt werden kann.

Die Einrichtung zur optischen Zielmarkierung 40 besteht aus einem programmgesteuerten Stellmotor 41 und einer durch letzteren in alle Richtungen schwenkbaren Punktlichtquelle, vorzugsweise einer Laser-Lichtquelle 42. Die Stellgrößen für den Motor 41 werden durch eine Prossorsteuerung aus den Daten errechnet, die über ein Koordinaten-Eingabefeld 44 der Tastatur 43 (Fig.5) eingegeben werden. Die Steuerung erfolgt so, daß der punktförmige Lichtstrahl genau den Schnittpunkt der über das Eingabefeld 44 eingegebenen Koordinaten auf der Sandoberfläche beleuchtet. Ein Kontrolldisplay 45 zeigt die eingegebenen Werte an. Über ein Tastenfeld 46 sind Funktionen, wie Ein- und Ausschalten, Leuchtstärkenregelung und dergleichen eingebbar.

Fig.7 zeigt das Eckteil 14 der Fig.5 in Blickrichtung A. Wie diese Zeichnung erkennen läßt, hat die Flanschplatte 27 einen dem maximalen Schwenkwinkel des Galgens 25 entsprechenden Ausschnitt 29. Ein im Bereich des Auschnitts 29 angeordneter Bolzen 30 dient als Endanschlag in beiden Richtungen. Weiterhin ist eine Sperrklinke 31 vorgesehen, die die Grundstellung des Galgens 25, wie in Fig.7 gezeigt, durch federndes Einrasten in den Ausschnitt 29 sichert. Ein Schwenken des Galgens 25 ist somit nur möglich, wenn die Sperrklinke 31 entgegen ihrer Federung außer Eingriff mit dem Ausschnitt 29 gebracht wird.

## Patentansprüche

1. Sandkasten für den taktischen Unterricht und zur Einsatzvorbereitung im militärischen Bereich und beim Katastrophenschutz, dadurch gekennzeichnet, daß der Sandkasten aus mehreren gleichen Bauteilen (1) besteht, die eine Bodenplatte (2) und eine Bordwand (3) haben, wobei die Breite jedes Bauteils (1) gleich der Breite und die Tiefe gleich der halben Breite des Sandkastens ist, daß die Bauteile (1) jeweils paarweise spiegelbildlich auf stoß augeordnet sind, wobei sich die Paare um 90° zueinander verdreht im Bereich der Bodenplatten (2) überlagern, und daß die Bauteile (1) im Bereich der im rechten Winkel aneinanderstoßenden Bordwände (3) formschlüssig miteinander verbunden sind.

2. Sandkasten nach Anspruch 1, dadurch gekennzeichnet, daß ein Untersatz (20) für den Sandkasten vorgesehen ist, dessen äußere Abmessungen gleich den Außenmaßen des Sandkastens sind, daß der Untersatz (20) im Bereich der Ecken außen Laschen (23) hat, die über die Auflagefläche vorstehen, daß die Laschen (23) teilweise lösbar befestigt sind und daß der Untersatz (20) aus einem Tragrahmen (21) und mit diesem lösbar verbundenen Beinen (22) besteht.

3. Sandkasten nach Anspruch 1, dadurch gekennzeichnet, daß außen an der Bordwand (3) über die gesamte Breite ein pult artige Schrägfläche (6) angeordnet ist, die oben in eine Ablagefläche (7) übergeht und unten eine überstehende Anlagekante (8) hat, daß der Raum unter der Ablage- und Schrägfläche durch eine Verlängerung (4) der Bodenplatte (2) geschlossen ist und daß die Schrägfläche (6) Löcher (9) zur Aufnahme von Steckbuchsen zum Anschluß von Sprechsätzen, Potentiometern oder dergleichen hat.

4. Sandkasten nach Anspruch 3, dadurch gekennzeichnet, daß die Verlangerung (4) der Bodenplatten schlitzförmige Ausnehmungen (5) zum Durchgriff für die Laschen (23) hat.

5. Sandkasten nach Anspruch 3, dadurch gekennzeichnet, daß zwei im rechten Winkel aneinanderstoßende Bauteile (1) durch ein mit den Schrägflächen (6) und den Verlängerungen (4) der Bodenplatten verschraubten Eckteile (14) lösbar (Verschraubung 19) miteinander verbunden sind.

6. Sandkasten nach Anspruch 1, dadurch gekennzeichnet, daß in der Mitte oberhalb des Sandkastens eine Projektionseinrichtung angeordnet ist.

7. Sandkasten nach Anspruch 6, dadurch gekennzeichnet, daß die Projektionseinrichtung ein Dia-Projektor (37) ist.

8. Sandkasten nach Anspruch 6, dadurch gekennzeichnet, daß eine Projektionswand vorgesehen ist, durch die der Sandkasten abgedeckt werden kann.

9. Sandkasten nach Anspruch 1, dadurch gekennzeichnet, daß in der Mitte oberhalb des Sandkastens eine Punktlichtquelle angeordnet ist und daß die Lichtquelle durch eine Steuereinrichtung in alle Richtungen schwenkbar ist.

10. Sandkasten nach Anspruch 9, dadurch gekennzeichnet, daß die Lichtquelle eine Laser-Lichtquelle (42) ist und daß die Steuereinrichtung ein Stellmotor (41) ist, der über eine Prozessorsteuerschaltung betrieben wird, die über eine Tastatur (43) eingegebene Koordinatenwerte in eine entsprechende Stellgröße für den Stellmotor (41) errechnet.

11. Sandkasten nach Anspruch 6 oder 9, dadurch gekennzeichnet, daß die Projektionseinrichtung und/oder die Punktlichtquelle am oberen Ende eines Galgens (25) angebracht sind und daß der Galgen (25) aus der Stellung über der Mitte des Sandkastens in eine Stellung schwenkbar ist, in der sich die Projektionseinrichtung und/oder die Punktlichtquelle außerhalb des Sandkastenbereichs befindet.

## Claims

1. Sandbox for the tractical training and for preparing operational missions within the military sphere as well as for disaster control purposes, **characterized** in that said sandbox consists of several equal component parts (1) each having a base plate (2) and a sideboard (3), with the width of each of said component parts (1) being equal to the width, and the depth being equal to half the width of said sandbox, that said component parts (1) are each time butt-jointed mirror-invertedly in pairs, with said pairs being superimposed upon one another and twisted by 90 degrees in relation to one another within the range of said base plates (2), and that said component parts (1) are form-lockingly connected to one another within the range of the rectangularly jointed sideboards (3).

2. A sandbox as claimed in claim 1, **characterized** in that for said sandbox there is provided a supporting understructure (20) whose outer dimensions are equal to the overall size of said sandbox, that said supporting understructure (20), within the range of the corners, is provided on the outside with small plates (23) which project over the supporting surface, that said small plates (23) are partly detachably mounted, and that said supporting understructure (20) consists of a supporting frame member (21) and of legs ( 22 ) which are detachably connected thereto.

3. A sandbox as claimed in claim 1, **characterized** in that on the outside of said sideboard (3) and extending throughout the entire width, there is arranged a desk-shaped slanting surface ( 6 ) which, in its upper part, turns into a tray-shaped rest ( 7 ) and, in its lower part, has a somewhat projecting lay edge (8), that the space below said tray-shaped rest and said slanting surface is closed by an extension (4) of said base plate (2), and that said slanting surface (6) is provided with holes (9) intended to take up the plug and socket connections of intercommunication radio sets, potentiometers, or the like.

4. A sandbox as claimed in claim 3, characterized in that said extension (4) of said base plates are provided with slot-shaped recesses (5) for permitting the passage therethrough of said small plates (23).

5. A sandbox as claimed in claim 3, characterized in that two of said component parts (1) adjoining each other at right ang les are detachably connected to one another (screw connections 19 ) by means of a corner member ( 14) as screwed to said slanting surfaces (6) and said extensions (4) of said base plates (2).

6. A sandbox as claimed in claim 1, characterized in that an optical projection instrument is placed in the center above said sandbox.

7. A sandbox as claimed in claim 6, **characterized** in that said optical projection instrument is a slide ( transparency ) projector (37).

8. A sandbox as claimed in claim 6, characterized in that there is provided a projection screen by which the sandbox can be covered up.

9. A sandbox as claimed in claim 1, characterized in that a spot-light source is disposed in the center above the sandbox, and that said light source is capable of being swivelled in all directions by means of a control equipment.

10. A sandbox as claimed in claim 9, **characterized** in that said light source is a laser light source (42), and that said control equipment is a servomotor ( 41 ) which is operated via a processor control circuit which serves to compute the respective manipulated variables for the said servomotor ( 41 ) from the co-ordinate value data as fed-in via a keyboard (43).

11. A sandbox as claimed in one of the foregoing claims 6 or 9, characterized in that said projector and/or said spot-light source is/are attached to the upper end of a boom ( 25 ), and that said boom (25) is capable of being swivelled from the position above the center of the sandbox into a position in which said projector and/or said spot-light source is/are positioned outside the sandbox area.

## Revendications

1. Bac à sable conçu pour l'instruction tactique et pour la préparation des forces à leur mission, dans le secteur militaire et pour le plan ORSEC, caractérisé par le fait que le bac en question est constitué de plusieurs éléments (1) identiques possédant un fond (2) et une paroi latérale (3), étant entendu que la largeur de chacun de ces éléments (1) est égale à la largeur du bac à sable et que leur profondeur est égale à la moitié de la largeur de celui-ci, caractérisé aussi par le fait que les éléments (1) sont respectivement disposés deux à deux de manière à être jointifs par image réfléchie, étant entendu que les paires ainsi formées, tournées de 90 les unes vers les autres, se superposent dans la zone des plaques de fond (2), et enfin par le fait que dans la zone des parois latérales (3) jointives à angle droit, les éléments (1) sont reliés les uns aux autres d'une manière compacte.

2. Bac à sable conforme à la revendication 1, caractérisé par le fait que pour le bac à sable, on a prévu un socle (20) dont les dimensions extérieures sont égales aux dimensions hors-tout dudit bac, que le socle (20), dans la zone des coins à l'extérieur, est muni de brides de fixation (23) faisant saillie au-dessus de la surface d'appui, que ces mêmes brides (23) sont fixées de façon à être en partie amovibles et enfin que le socle (20) est composé d'un cadre porteur (21) et de pieds (22) reliés à celui-ci de manière à ce qu'ils soient amovibles.

3. Bac à sable conforme à la revendication 1, caractérisé par le fait qu'à l'extérieur de la paroi latérale (3), on a aménagé sur toute la largeur un plan incliné genre pupitre se transformant en haut en une surface de dépôt (7) et présentant en bas un bord de contact (8), que l'espace situé en dessous de la surface de dépôt et du plan incliné est fermé par un prolongement (4) de la plaque de fond (2) et que le plan incliné (6) est doté de trous (9) pour pouvoir positionner des douilles de jonction permettant de raccorder des ensembles radio, potentiomètres ou autres appareils du même genre.

4. Bac à sable conforme à la revendication 3, caractérisé par le fait que le prolongement (4) des plaques de fond présentent des creux (5) en forme de fente servant à faire passer les brides (23).

5. Bac à sable conforme à la revendication 3, caractérisé par le fait que deux éléments (1) jointifs à angle droit sont reliés entre eux par une pièce d'angle (14) fixée par des vis aux plans inclinés (6) et aux prolongements (4) des plaques de fond de sorte à être amovibles (raccord vissé 19).

6. Bac à sable conforme à la revendication 1, caractérisé par le fait qu'au-dessus du centre du bac à sable, on a disposé un appareil de projection.

7. Bac à sable conforme à la revendication 6, caractérisé par le fait que cet appareil de projection est un projecteur-diapo (37).

8. Bac à sable conforme à la revendication 6, caractérisé par le fait qu'on a prévu un écran de projection permettant de pouvoir recouvrir le bac à sable.

9. Bac à sable conforme à la revendication 1, caractérisé par le fait qu'au-dessus du centre du bac à sable, on a placé une source de lumière ponctuelle pouvant être pivotée dans tous les sens avec un organe de commande.

10. Bac à sable conforme à la revendication 9, caractérisé par le fait que la source lumineuse est une source laser (42) et que l'organe de commande est un servomoteur (41) actionné par un mécanisme de commutation à processeur apte à convertir les coordonnées entrées au clavier (43) en un paramètre de réglage adéquat pour le servomoteur (41).

11. Bac à sable conforme à la revendication 6 ou 9, caractérisé par le fait que l'appareil de projection et/ou que la source lumineuse ponctuelle sont fixés à l'extrémité supérieure d'une perche (25) et que cette perche (25) peut être pivotée depuis la position au-dessus du centre du bac à sable dans la position où se trouvent à ce moment-là l'appareil de projection et/ou la source lumineuse ponctuelle en dehors de la zone du bac à sable.
